**Europäisches Patentamt**

**European Patent Office**

**Office européen des brevets**

(11) Numéro de publication:

**0 090 754**
**A1**

# (12) DEMANDE DE BREVET EUROPEEN

(21) Numéro de dépôt: 83440021.0

(51) Int. Cl.³: **C 05 F 9/04**

(22) Date de dépôt: **24.03.83**

(30) Priorité: **24.03.82 FR 8205139**

(71) Demandeur: **SOCIETE ALSACIENNE D'APPLICATION AUX PRODUITS ORGANIQUES AGRI-ALS SARL, 99, Rue de la Plaine des Bouchers, F-67100 Strasbourg (FR)**
Demandeur: **Chambolle, Jean-Pierre, 24, Boulevard Leblois, F-67000 Strasbourg (FR)**

(43) Date de publication de la demande: **05.10.83**
**Bulletin 83/40**

(84) Etats contractants désignés: **AT BE CH DE GB IT LI LU NL**

(72) Inventeur: **Chambolle, Jean-Pierre, 24, Boulevard Leblois, F-67000 Strasbourg (FR)**

(54) Procédé de compostage aérobie accéléré et dirigé de matières végétales et/ou de fumiers, en particulier de verts de sucrerie, et dispositif pour la mise en oeuvre de ce procédé.

(57) La présente invention concerne un procédé de compostage aérobie accéléré et dirigé de matières végétales et/ou de fumiers, en particulier de verts de sucrerie, et un dispositif pour la mise en oeuvre de ce procédé.

Procédé caractérisé en ce qu'on réalise, à intervalles réguliers, déterminés en fonction de la nature des produits à traiter, une aération contrôlée de l'andain (1) destinée à éviter la formation de zones d'anaérobiose, et à favoriser et contrôler l'effet de cheminée, au moyen de cannes (3) d'aération amovibles, en ce qu'on contrôle les paramètres physiques tels que la température de l'andain, son humidité, sa compacité, et sa masse, ainsi que les paramètres chimiques de l'andain, tels que le pH, les pertes azotées, etc...., puis on procède à un retournement de l'andain au moyen de la machine automatique de retournement à chaque fois qu'un ou plusieurs paramètres physiques et/ou chimiques ne sont plus contenus dans une fourchette prédéterminée, et pour réaliser une homogénéisation parfaite de la masse de l'andain (1) par introduction au centre du nouvel andain des couches périphériques de l'ancien andain avec ajout éventuel d'éléments favorisant le compostage.

1

PROCEDE DE COMPOSTAGE AEROBIE ACCELERE ET DIRIGE DE
MATIERES VEGETALES ET/OU DE FUMIERS, EN PARTICULIER DE
VERTS DE SUCRERIE, ET DISPOSITIF POUR LA MISE EN OEUVRE
DE CE PROCEDE.

La présente invention concerne le domaine du compostage de matières végétales et/ou de fumiers, en particulier des verts de sucrerie constitués par des déchets de lavage des betteraves tels que des radicelles et des herbes de ramassage, des écorces, et d'autres produits ligneux, et a pour objet un procédé de compostage aérobie accéléré et dirigé pour de telles matières.

L'invention a également pour objet un dispositif pour la mise en oeuvre de ce procédé.

Actuellement, le traitement par compostage de déchets végétaux de ce type et de fumiers est généralement effectué sur aire, par tour, au moyen de paniers grillagés empilés, ou en silos.

Le compostage sur aire consiste à réaliser un andain de forme quelconque, ou une meule sur une aire de stockage et à réaliser son oxygénation par retournement périodique de la matière le constituant au moyen d'un chargeur à godet, ou analogue, ou par insufflation d'air ou par aspiration au moyen d'une conduite perforée disposée sur l'aire de stockage ou sous cette dernière sous l'andain, reliée à une source

2

d'air comprimé ou de gaz, et s'étendant avantageusement dans le sens longitudinal de l'andain.

Cependant, ce procédé ne permet pas un traitement rapide de déchets et la méthode de retournement utilisée ne permet pas un contrôle de la formation de l'andain. En outre, dans le cas d'une insufflation ou d'une aspiration d'air ou de gaz au moyen d'une conduite perforée destinée à favoriser l'effet de cheminée, un retournement mécanique de l'andain, en vue d'obtenir un traitement homogène des produits, n'est plus possible du fait de la présence de ladite conduite, qui est pratiquement inamovible, de sorte qu'un traitement industriel de déchets par ce procédé n'est pas possible. Enfin, dans le cas du montage de la conduite perforée dans le sol, l'installation est très onéreuse.

Le compostage par tour consiste à introduire les produits à traiter dans une tour de grande hauteur dans le bas de laquelle est insufflé de l'air, le compost obtenu étant dégagé également dans le bas. Un tel procédé de compostag est cependant très onéreux dans sa mise en oeuvre, et un traitement homogène de la masse n'est pas réalisable du fait de la progression par gravité de sorte que les produits périphériques sont moins traités que ceux du noyau.

Le traitement par silos nécessite la réalisation de fosses parallélépipédiques horizontales dans lesquelles la matière est retournée au moyen d'une machine spécialement adaptée. Dans ce cas également, l'installation de traitement de la matière est très onéreuse.

La présente invention a pour but de pallier ces inconvénients.

Elle a, en effet, pour objet un procédé de compostage aérobie accéléré et dirigé de matières végétales et/ou de fumiers, consistant essentiellement
à réaliser automatiquement une mise en andains des produits à traiter sur une aire en dur, couverte ou non, parfaitement plane, et de préférence légèrement inclinée dans le sens longitudinal de l'andain, et à ajouter éventuellement, pendant cette phase d'andainage, des éléments favorisant le compostage tels que l'azote ou le phosphore,

à réaliser une aération contrôlée de l'andain,

à contrôler les paramètres physiques tels que la température de l'andain, son humidité, sa capacité, et sa masse, ainsi que les paramètres chimiques de l'andain, tels que le pH, les pertes azotées,

à procéder à un retournement de l'andain au moyen de la machine automatique de retournement à chaque fois qu'un ou plusieurs paramètres physiques et/ou chimiques ne sont plus contenus dans une fourchette prédéterminée, et pour réaliser une homogénéisation parfaite de la masse de l'andain par introduction au centre du nouvel andain des couches périphériques de l'ancien andain avec ajout éventuel d'éléments favorisant le compostage,

à répéter ces opérations jusqu'à obtention d'un produit décomposé et sain du point de vue phytosanitaire pouvant servir d'amendement organique,

caractérisé en ce que l'aération contrôlée de l'andain de section carrée ou rectangulaire destinée à éviter la formation de zones d'anaérobiose et à favoriser et contrôler l'effet de cheminée et à réaliser à intervalles réguliers, déterminés en fonction de la nature des produits à traiter est obtenue au moyen de cannes d'aération amovibles.

L'invention a également pour objet un dispositif pour la mise en oeuvre de ce procédé, caractérisé en ce qu'il est constitué par des cannes d'aération munies d'une extrémité perforée et reliées chacune au moyen d'un tuyau souple, par l'intermédiaire d'un connecteur, à un tube principal rigide ou souple de distribution relié à une extrémité à une source de propulsion ou d'extraction d'air ou de gaz, et pour un appareil de commande de mise en marche et d'arrêt de la source de propulsion sous forme d'une horloge ou d'un microprocesseur.

4

L'invention sera mieux comprise grâce à la description ci-après, qui se rapporte à un mode de réalisation préféré, donné à titre d'exemple non limitatif, et expliqué avec référence au dessin schématique annexé, dans lequel :

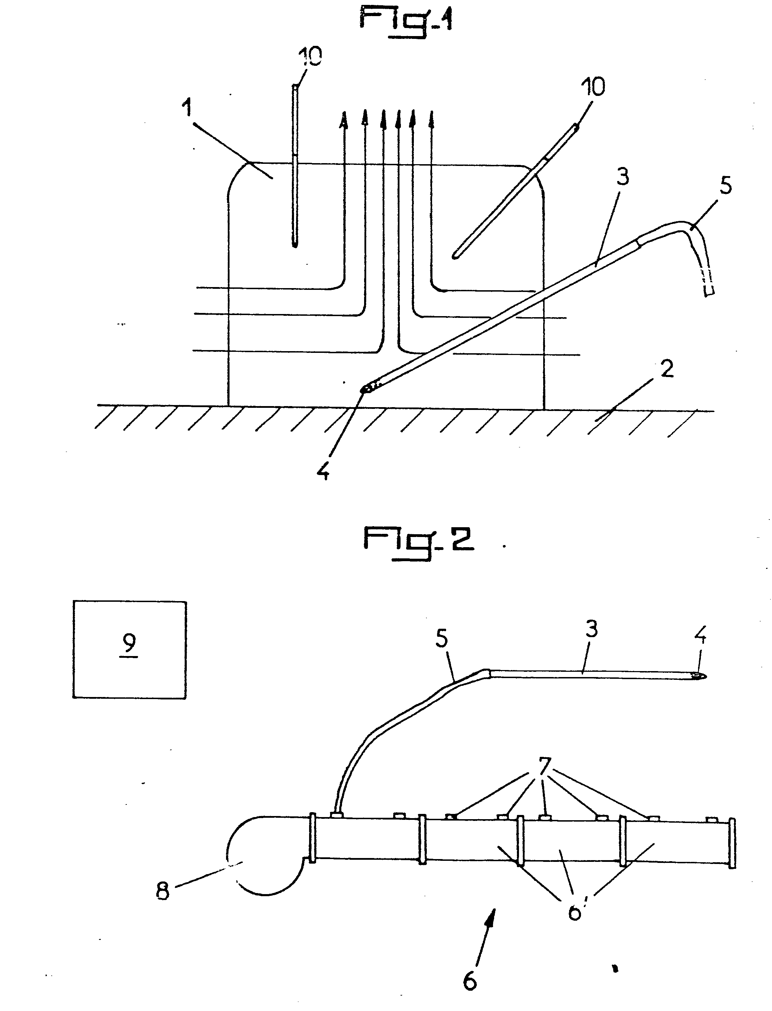

la figure 1 est une vue en coupe d'un andain réalisé conformément à l'invention, et

la figure 2 est une vue en élévation latérale d'un dispositif d'aération contrôlée.

Le procédé de compostage aérobie accéléré et dirigé de matières végétales et/ou de fumiers consiste à réaliser un andain 1 de section carrée ou rectangulaire sur une aire 2, qui peut être converte ou à l'air libre, et qui est parfaitement plane et avantageusement inclinée dans le sens longitudinal. La réalisation de cet andain 1 s'effectue au moyen d'une machine automatique de retournement à grand débit. Lors de la réalisation de l'andain 1, il est possible d'ajouter aux produits à traiter des éléments favorisant le compostage tels que de l'azote, du phosphore, de l'eau, etc... Après réalisation de l'andain 1, des cannes d'aération 3 sont enfoncées à intervalles réguliers dans ledit andain 1 jusque dans sa partie centrale inférieure où leur extrémité perforée 4 diffuse de l'air ou un autre gaz destiné à augmenter l'effet de cheminée de l'andain 1, représenté par les flèches. Ces cannes d'aération 3 sont reliées chacune par un tuyau souple 5 à un tube principal rigide 6 de distribution, par l'intermédiaire d'un connecteur 7, le tube principal 6 étant relié à une extrémité à une source 8 de propulsion ou d'extraction d'air ou de gaz, qui est commandée par un appareil 9 de commande de mise en marche et d'arrêt sous forme d'une horloge ou d'un microprocesseur.

Le tube principal 6 est avantageusement réalisé en sections modulaires légères 6' à systèmes de raccordement rapide permettant une adaptation à la longueur de l'andain, et facilement manoeuvrables.

0090754

5

Dans l'andain 1 sont, en outre, enfoncés divers moyens de contrôle tels que des thermomètres ou des thermo-sondes 10, ainsi que des dispositifs de mesure d'autres paramètres physiques, ou chimiques tels que la compacité de l'andain, son humidité, sa température, la valeur du pH, les pertes azotées, etc.. En fonction de l'évolution des divers paramètres, il est possible d'intervenir sur le processus de compostage, soit au moyen du dispositif d'aération, soit par retournement de l'andain 1.

L'intervention au moyen du dispositif d'aération s'effectue principalement par une insufflation séquentielle d'air, ou le cas échéant commandée par le microprocesseur qui est relié aux divers dispositifs de contrôle, soit par injection de gaz favorisant le compostage ou équilibrant le milieu, cette injection de gaz pouvant également être commandée par le microprocesseur, ce microprocesseur réagissant alors en fonction des variations des divers paramètres mesurés par les dispositifs de contrôle, l'installation de gaz pouvant également servir, notamment en fin de traitement, à d'autres buts, à savoir la stabilisation, la désinfection, la désodorisation, etc...

Le retournement de l'andain 1 peut être réalisé de manière aléatoire ou séquentielle au moyen de la machine de retournement automatique, notamment en cas de difficultés de démarrage du processus ou en cas de chauffe trop rapide ou trop élevée ou de compacité trop importante, en vue de contrôler la fermentation aérobie et d'homogénéiser parfaitement la masse de l'andain 1 par introduction au centre du nouvel andain des couches périphériques de l'ancien andain et de redonner, le cas échéant, à l'andain une compacité compatible avec une bonne vitesse de compostage.

A chaque retournement d'andain, les cannes 3 sont retirées pour permettre le passage de la machine, puis elles sont remises en place pour la poursuite du traitement d'aération. En outre, lors de chaque retournement il est possible d'intervenir sur la composition des produits à traiter en ajoutant des éléments chimiques ou autres pour la qualité, notamment pour le contrôle de stabilisation du produit et pour la réorganisation de l'azote.

Le processus de retournement et d'aération est répété jusqu'à obtention d'un produit parfaitement homogène sain du point de vue phytosanitaire, et décomposé, qui peut servir d'amendement organique.

A cet effet, il est avantageux de réaliser la fin du processus de compostage, en particulier la stabilisation du produit et le séchage sous hangar, à l'abri des influences climatiques.

A titre d'exemple de réalisation de l'invention, pour le traitement des verts de sucrerie, constitués par des radicelles et par des herbes de ramassage, le procédé consiste à réaliser un andainage des produits mélangés dans un rapport de l'ordre de 1:1 en volume suivant l'humidité et les caractéristiques chimiques, avec des écorces broyées d'une granulométrie entre 0 et 80 mm, afin de corriger le rapport C/N des herbes, et de contrôler la compacité et de favoriser le retournement au moyen d'une machine de retournement automatique formant un andain de section carrée ou rectangulaire présentant une bonne tenue et à ajouter lors de la formation de l'andain, des éléments améliorant la qualité notamment pour la réorganisation de l'azote et pour la stabilisation du produit, à réaliser un compostage rapide en favorisant l'effet de cheminée par insufflation d'air ou de gaz de manière à provoquer une montée rapide en température et un haut niveau de température permettant la suppression du risque de rhizomanie avec une marge de sérurité importante, à savoir de l'ordre de 70°C à 80°C, à effectuer un contrôle de l'homogénéisation à chaque retournement, et à amener au cours desdits retournements au centre de l'andain, qui est une zone à forte température, les couches externes de l'andain en vue de leur stérilisation.

Conformément à une caractéristique de l'invention,

7

l'apport d'autres matières carbonées doit corriger le C/N de la matière de base à composter et permet de contrôler les paramètres physiques pour le retournement et l'aération tels que la compacité et la tenue des andains, et doit apporter suffisamment de lignine dans le cas de la réalisation d'un amendement organique humique.

Grâce au procédé et au dispositif conformes à l'invention, il est possible de réaliser un compostage aérobie, accéléré et dirigé de matières végétales et/ou de fumiers, en particulier de verts de sucrerie, d'écorces, ou de corps de meule, qui permet une montée en température rapide ainsi que des hautes températures et dans lequel l'ensemble de la masse de l'andain est échaudé et stérilisé grâce aux retournements successifs et à l'aération contrôlée. En outre, en particulier dans le cas des verts de sucrerie, tous risques de propagation de maladies phytosanisaires aux végétaux, telles que la rhizomanie sont pratiquement supprimés, et le traitement de stérilisation obtenu est plus valorisant et moins onéreux que ceux d'échaudage à la vapeur ou de séchage à température stérilisante appliqués à ce jour. Enfin, les installations nécessaires à la mise en oeuvre du procédé sont relativement simples à réaliser et d'un coût très nettement inférieur à celles mises en oeuvre dans les procédés connus.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

8

REVENDICATIONS.

1.       Procédé de compostage aérobie accéléré et dirigé de matières végétales et/ou de fumiers, consistant essentiellement

à réaliser automatiquement une mise en andains (1) des produits à traiter sur une aire en dur (2), couverte ou non, parfaitement plane, et de préférence légèrement inclinée dans le sens longitudinal de l'andain (1), au moyen d'une machine de retournement à grand débit, et à ajouter éventuellement, pendant cette phase d'andainage, des éléments favorisant le compostage tels que l'azote ou le phosphore,

à réaliser une aération contrôlée de l'andain (1),

à contrôler les paramètres physiques tels que la température de l'andain, son humidité, sa capacité, et sa masse, ainsi que les paramètres chimiques de l'andain, tels que le pH, les pertes azotées,

à procéder à un retournement de l'andain au moyen de la machine automatique de retournement à chaque fois qu'un ou plusieurs paramètres physiques et/ou chimiques ne sont plus contenus dans une fourchette prédéterminée, et pour réaliser une homogénéisation parfaite de la masse de l'andain (1) par introduction au centre du nouvel andain (1) des couches périphériques de l'ancien andain avec ajout éventuel d'éléments favorisant le compostage,

à répéter ces opérations jusqu'à obtention d'un produit décomposé et sain du point de vue phytosanitaire pouvant servir d'amendement organique,

caractérisé en ce que l'aération contrôlée de l'andain de section carrée ou rectangulaire destinée à éviter la formation de zones d'anaérobiose et à favoriser et contrôler l'effet de cheminée et à réaliser à intervalles réguliers, déterminés en fonction de la nature des produits à traiter est obtenue au moyen de cannes (3) d'aération amovibles.

2.       Dispositif pour la mise en oeuvre du procédé suivant

la revendication 1, caractérisé en ce qu'il est constitué par des cannes d'aération (3) munies d'une extrémité perforée (4) et reliées chacune au moyen d'un tuyau souple (5) par l'intermédiaire d'un connecteur (7), à un tube principal rigide de distribution (6) relié à une extrémité à une source (8) de propulsion d'air ou de gaz, et par un appareil (9) de commande de mise en marche et d'arrêt de la source de propulsion (8) sous forme d'une horloge ou d'un microprocesseur.

3. Dispositif suivant la revendication 2, caractérisé en ce que le tube principal (6) est avantageusement réalisé en sections modulaires légères (6') à systèmes de raccordement rapide permettant une adaptation à la longueur de l'andain, et facilement manoeuvrables.

4. Procédé suivant la revendication 1, mettant en oeuvre le dispositif suivant l'une quelconque des revendications 2 et 3, caractérisé en ce qu'il est appliqué aux verts de sucrerie, constitués par des radicelles et par des herbes de ramassage, il consiste à réaliser un andainage des produits mélangés dans un rapport de l'ordre de 1:1 en volume suivant l'humidité et les caractéristiques chimiques, avec des écorces broyées d'une granulométrie comprise entre 0 et 80 mm, afin de corriger le rapport C/N des herbes, et de contrôler la compacité et de favoriser le retournement au moyen d'une machine de retournement automatique formant un andain de section carrée ou rectangulaire présentant une bonne tenue et à ajouter lors de la formation de l'andain des éléments améliorant la qualité notamment pour la réorganisation de l'azote et pour la stabilisation du produit, à réaliser un compostage rapide en favorisant l'effet de cheminée par insufflation d'air ou de gaz de manière à provoquer une montée rapide en température et un haut niveau de température permettant la suppression du risque de rhizomanie, avec une marge de sécurité importante. à savoir de l'ordre de 70°C à 80°C, à effectuer un contrôle de l'homogénéisation à chaque retournement, et à amener au cours desdits retournements au centre de l'andain, qui est une zone à forte

10

température, les couches externes de l'andain en vue de leur stérilisation.

5. Procédé suivant la revendication 4, caractérisé en ce que l'apport d'autres matières carbonées corrigeant le C/N de la matière de base à composter et/ou apportant suffisamment de lignine dans le cas de la réalisation d'un amendement organique humique est utilisé pour contrôler les paramètres physiques pour le retournement et l'aération tels que la compacité et la tenue des andains.

# Fig-1

# Fig-2

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | AU-A- 478 040 (VOJTECH BELINO HOLLY) <br> * Pages 17-18, revendications 1,2,3 * | 1,4,5 | C 05 F 9/04 |
| | --- | | |
| Y | DE-B-1 592 729 (PORTLAND-ZEMENTWERKE) <br> * Colonnes 4-5, revendication 1 * | 1 | |
| | --- | | |
| Y | US-A-2 285 834 (DOUGLAS McINTYRE PROCTOR) <br> * Figures 6,7; page 3, colonne de gauche, lignes 61-75 * | | |
| | --- | | |
| A | FR-A-1 264 237 (DESIRE ADAM) | | |
| | ----- | | **DOMAINES TECHNIQUES RECHERCHES (Int. Cl. ³)** <br><br> C 05 F 9/04 |

Le présent rapport de recherche a été établi pour toutes les revendications

| Lieu de la recherche <br> LA HAYE | Date d'achèvement de la recherche <br> 05-07-1983 | Examinateur <br> STEELANDT E. |
|---|---|---|